# EUROPEAN PATENT APPLICATION

(11) **EP 4 716 073 A1**
(43) Date of publication of application: **25.03.2026**
(21) Application number: 24807161.5
(22) Date of filing: 10.05.2024
(51) Int. Cl.: H02K 15/04

(54) **MANUFACTURING METHOD FOR STATOR, TWISTING MACHINING DEVICE, AND TWISTING JIG ASSEMBLY**

(30) Priority: 18.05.2023 JP 2023082598
(71) Applicant: NHK Spring Co., Ltd., Yokohama-shi, Kanagawa 236-0004 (JP)
(72) Inventor: KOBAYASHI, Dai, Yokohama-shi, Kanagawa 236-0004 (JP); OTSUKA, Motoyuki, Yokohama-shi, Kanagawa 236-0004 (JP); SHIMADA, Satoru, Yokohama-shi, Kanagawa 236-0004 (JP)
(74) Representative: Oppermann, Frank
(86) International application number: PCT/JP2024/017477
(87) International publication number: WO 2024/237209

(57) **Abstract**

Provided is a manufacturing method for a stator capable of bending tip portions having different lengths and including coil ends of segment coils while protecting the coil ends having no insulating layer. The method relatively displaces and bends first tip portions 7A in a circumferential direction with respect to a stator core 3 while holding at least axial base portions of the coil ends 7a of the first tip portions 7A of segment coils held by the stator core, and allows the first tip portions 7A and second tip portions 7B to be displaced so as to approach each other in the axial direction while holding at least axial base portions of the coil ends 7a of the second tip portions 7B having shorter projecting length than the first tip portions 7A, and relatively displaces the second tip portions 7B with respect to the stator core 3 in the circumferential direction to be bent.

## Description

### FIELD OF THE INVENTION

The present invention relates to a manufacturing method for a stator of a rotating electrical machine such as a motor or a generator, a twisting machining device, and a twisting jig assembly.

### BACKGROUND OF THE INVENTION

As a twisting jig used in a conventional twisting machining device for a stator, there is a twisting jig described in Patent literature 1, for example. In this twisting jig, movable members are provided on a cylindrical body portion. Further, the body portion is provided with first accommodating recessed portions, the movable members are provided with second accommodating recessed portions, and respective accommodating recessed portions are disposed at regular intervals. Between the movable members and the body portion, coil springs are provided to bias the movable members in a rotational direction of the body portion at the time of twisting.

When bending tip portions including coil ends of segment coils projecting from the stator core, the tip portions having different lengths are inserted and accommodated into the first accommodating recessed portions and the second accommodating recessed portions. Then, rotating the body portion of the twisting jig, the first tip portions accommodated in the first accommodating recessed portions are bent in advance by twisting. On the other hand, the second tip portions accommodated in the second accommodating recessed portions start to be twisted when the coil springs are compressed and each movable member comes into contact with an end face rearward in the rotational direction of each recessed portion. Therefore, the tip portions having the different lengths are bent at the same time.

In this twisting jig, the second accommodating recessed portions are, however, configured to be displaceable only in the circumferential direction. Accordingly, the tip portions having a relatively small projection amount from the stator core may receive bending force in a state that the coil ends having no insulating layer are half-inserted.

In this half-inserting state, the coil ends are not entirely accommodated in the second accommodating recessed portions of the twisting jig, but are accommodated halfway in a projecting direction of the coil ends with no insulation layer.

Accordingly, in the conventional twisting jig, there is a risk that the coil ends having no insulating layer may unintentionally be bent, and it is hard to bend the tip portions including the coil ends while suppressing unintended bending of the coil ends to protect the coil ends.

### CITATION LIST

### PATENT LITERATURE

PATENT LITERATURE 1: JP6685572B

### SUMMARY OF THE INVENTION

### PROBLEMS TO BE SOLVED BY THE INVENTION

The problem to be solved is that it is hard to bend tip portions having different lengths and including coil ends while protecting the coil ends having no insulating layer.

### MEANS FOR SOLVING THE PROBLEM

The present invention provides a manufacturing method for a stator in which first tip portions and second tip portions including coil ends of segment coils held by a stator core and being projected from the stator core in an axial direction are arranged in a circumferential direction, the second tip portions having a relatively short length of the projecting, and the first and the second tip portions being bent in the circumferential direction. The manufacturing method relatively displaces the first tip portions in the circumferential direction to be bent with respect to the stator core while holding at least axial base portions of the coil ends of the first tip portions. Then, it allows the first tip portions and the second tip portions to be displaced so as to approach each other in the axial direction while holding at least axial base portions of the coil ends of the second tip portions, and relatively displaces the second tip portion with respect to the stator core in the circumferential direction to be bent.

Further, the present invention a twisting machining device for a stator in which first tip portions and second tip portions including coil ends of segment coils held by a stator core and being projected from the stator core in an axial direction are arranged in a circumferential direction, the second tip portions having a relatively short length of the projecting, and the first and the second tip portions being bent in the circumferential direction. The twisting machining device includes first holding portions formed to hold at least axial base portions of the coil ends of the first tip portions and arranged so as to be relatively displaceable with respect to the stator core in the circumferential direction, and second holding portions arranged so as to be displaceable to approach the first holding portion at least in the axial direction, formed to hold at least axial base portions of the coil ends of the second tip portions, and being relatively displaceable with respect to the stator core in the circumferential direction together with the first holding portions.

Further, the present invention provides a twisting jig assembly used in a twisting machining device for a stator in which first tip portions and second tip portions including coil ends of segment coils held by a stator core and being projected from the stator core in an axial direction are arranged in a circumferential direction, the second tip portions having a relatively short length of the projecting, and the first and the second tip portions being bent in the circumferential direction. The twisting jig assembly includes a twisting jig being provided with first holding portions formed to hold at least axial base portions of the coil ends of the first tip portions and being arranged so as to be rotatable relative to the stator core, and movable bodies being incorporated in the twisting jig and being provided with second holding portions formed to hold at least axial base portions of the coil ends of the second tip portions, wherein at least the second holding portions are displaceable in the axial direction relative to the twisting jig so as to approach the first holding portions and the movable bodies are relatively rotatable with respect to the stator core together with the twisting jig.

### EFFECT OF THE INVENTION

According to the present invention, it is possible to bend the first tip portions and the second tip portions having different lengths and including the coil ends of the segment coils while protecting the coil ends having no insulating layer.

### BRIEF DESCRIPTION OF THE DRAWINGS

[FIG. 1] FIG. 1 is a perspective view of a stator supported by a supporting jig after bending first and second tip portions according to an embodiment of the present invention.
[FIG. 2] FIG. 2 is an enlarged perspective view illustrating part of the stator after bending the first and the second tip portions of FIG. 1.
[FIG. 3] FIG. 3 is a perspective view of the stator supported by the supporting jig before bending the first and the second tip portions.
[FIG. 4] FIG. 4 is an enlarged perspective view illustrating part of the stator of FIG. 3.
[FIG. 5] FIG. 5 is a perspective view illustrating a twisting jig crown used in the twisting machining device according to the embodiment of the present invention.
[FIG. 6] FIG. 6 is a side view of the twisting jig crown of FIG. 5.
[FIG. 7] FIG. 7 is a side view illustrating the twisting jig crown of FIG. 5 in which a guide ring and the like are omitted.
[FIG. 8] FIG. 8 is a side view illustrating the twisting jig crown of FIG. 7 in which guide pins are omitted.
[FIG. 9] FIG. 9 is a sectional view of the twisting jig crown of FIG. 5.
[FIG. 10] FIG. 10 is an enlarged sectional view illustrating part of FIG. 9.
[FIG. 11] FIG. 11 is a side view of a first twisting jig provided in the twisting jig crown of FIG. 5.
[FIG. 12] FIG. 12 is a bottom view of the first twisting jig of FIG. 11.
[FIG. 13] FIG. 13 is a front view illustrating a movable body provided in the twisting jig crown of FIG. 5.
[FIG. 14] FIG. 14 is a bottom view of the movable body of FIG. 13.
[FIG. 15] FIG. 15 is a side view of a guide ring provided in the twisting jig crown of FIG. 5.
[FIG. 16] FIG. 16 is a side view illustrating a twisting jig crown according to a modification.
[FIG. 17] FIG. 17 is an enlarged side view illustrating an initial position of a movable body with respect to a first twisting jig of the twisting jig crown of FIG. 5.
[FIG. 18] FIG. 18 is an enlarged side view illustrating the initial position of the movable body of FIG. 17 with the first and the second tip portions omitted.
[FIG. 19] FIG. 19 is an enlarged side view illustrating a position after displacement of the movable body with respect to the first twisting jig of the twisting jig crown of FIG. 5.

### EMBODIMENT FOR CARRYING OUT THE INVENTION

The object capable of bending tip portions having different lengths including coil ends while protecting the coil ends having no insulating layer is accomplished by allowing first and second tip portions to be displaced so as to approach each other in an axial direction while holding at least axial base portions of the coil ends of the first and second tip portions.

Namely, a manufacturing method for a stator is a method for manufacturing a stator 1 in which first tip portions 7A and second tip portions 7B including coil ends 7a of segment coils 7 held by a stator core 3 and being projected from the stator core 3 in an axial direction are arranged in a circumferential direction, the second tip portions having a relatively short length of the projecting, and the first and the second tip portions 7A and 7B being bent in the circumferential direction.

This manufacturing method relatively displaces the first tip portions 7A in the circumferential direction to be bent with respect to the stator core 3 while holding at least axial base portions of the coil ends 7a of the first tip portions 7A. Then, it allows the first tip portions 7A and the second tip portions 7B to be displaced so as to approach each other in the axial direction while holding at least axial base portions of the coil ends 7a of the second tip portions 7B, and relatively displaces the second tip portions 7B with respect to the stator core 3 in the circumferential direction to be bent.

The bending of the second tip portions 7B is preferably performed while making relative displacement of the second tip portions 7B in the circumferential direction smaller than relative displacement of the first tip portions 7A in the circumferential direction.

In this case, the second tip portions 7B may be displaced together with the stator core 3 in a predetermined range in the circumferential direction and the axial direction relative to the first tip portions 7A during the bending, and thereafter the second tip portions 7B may be displaced in the circumferential direction together with the first tip portions 7A with respect to the stator core 3 to be bent.

The bending of the first and the second tip portions 7A and 7B preferably makes the coil ends 7a uniform in a pitch in the circumferential direction and in a projecting position of tip ends.

A twisting machining device for the stator 1 is a twisting machining device for the stator 1 in which the first tip portions 7A and the second tip portions 7B having the coil ends 7a of the segment coils 7 held by the stator core 3 and being projected from the stator core 3 in the axial direction are arranged in the circumferential direction, the second tip portions having a relatively short length of the projecting, and the first and the second tip portions 7A and 7B being bent in the circumferential direction.

The twisting machining device has first holding portions 21 and second holding portions 23. The first holding portions 21 are formed to hold at least the axial base portions of the coil ends 7a of the first tip portions 7A, respectively, and are arranged so as to be relatively displaceable in the circumferential direction with respect to the stator core 3. The second holding portions 23 are arranged so as to be displaceable to approach with respect to the first tip portions 21 at least in the axial direction, are formed so as to hold at least the axial base portions of the coil ends 7a of the second tip portions 7B, respectively, and are relatively displaceable with respect to the stator core 3 in the circumferential direction together with the first holding portions 21.

The second holding portions 23 are preferably configured to have a smaller displacement amount in the circumferential direction with respect to the stator core 3 than a displacement amount of the first tip portions 7A in the circumferential direction with respect to the stator core 3.

Further, the twisting machining device may be provided with a twisting jig 11 and movable bodies 25. The twisting jig 11 is provided with the first holding portions 21 and arranged so as to be relatively rotatable with respect to the stator core 3, to displace the first holding portions 21 by relatively rotating with respect to the stator core 3. The movable bodies 25 are incorporated in the twisting jig 11 and are provided with the second holding portions 23, are displaceable at least in the axial direction with respect to the twisting jig 11, and rotatable with respect to the stator core 3 together with the twisting jig 11.

The movable bodies 25 may be allowed to be displaced in a predetermined range in the circumferential direction and the axial direction with respect to the twisting jig 11, and may rotate relative to the stator core 3 together with the twisting jig 11 after the displacement of the predetermined range.

In this case, the twisting jig 11 may be provided with receiving portions 27c inclined with respect to the circumferential direction to receive the movable bodies 25 in the axial direction, to displace the movable bodies 25 in the circumferential direction and the axial direction with respect to the twisting jig 11 by relative displacement of the twisting jig to approach the stator core 3 in the axial direction.

Further, the twisting jig 11 may be provided with accommodating portions 27 for the movable bodies 25. The accommodating portions 27 incorporates the movable bodies 25 so as to be displaceable in a predetermined range in the circumferential direction and the axial direction. In this case, the receiving portions 27c are provided on the accommodating portions 25.

The first holding portions 21 may be provided with first tooth portions 21a, and the second holding portions 23 may be provided with second tooth portions 23a. The first tooth portions 21a cause the coil ends 7a of the first tip portions 7A to be inserted between adjacent first tooth portions 21a in the circumferential direction and to be held by the adjacent first tooth portions 21a in the circumferential direction. The second tooth portions 23a cause the coil ends 7a of the second tip portions 7B to be inserted and to be held circumferentially.

In this configuration, the accommodating portions 27 may be recessed portions that are provided adjacent to the first tooth portions of the twisting jig 11 in the circumferential direction and have a wider interval in the circumferential direction than an interval between the first tooth portions 21a. In this case, the receiving portions 27c are composed of bottom portions in the axial direction of the recessed portions.

Biasing members 37 may be incorporated between the twisting jig 11 and the movable bodies 25 to bias the movable bodies 25 to initial positions before the displacement with respect to the twisting jig 11.

Further, the twisting machining device may be provided with guide pins 29, a guide ring 31, and guide holes 31a in addition to the biasing members 37. The guide pins 29 are projected from the movable bodies 25 in the radial direction of the twisting jig 11. The guide ring 31 is provided along an outer periphery or an inner periphery of the twisting jig 11. The guide holes 31a are provided in the guide ring 31 to pass the guide pins 29 therethrough in the radial direction. In this case, the biasing members 37 are provided between the guide pins 29 and the guide ring 31.

The twisting jig assembly is provided with the aforementioned twisting jig 11 and the movable bodies 25.

### EMBODIMENT

### [Stator]

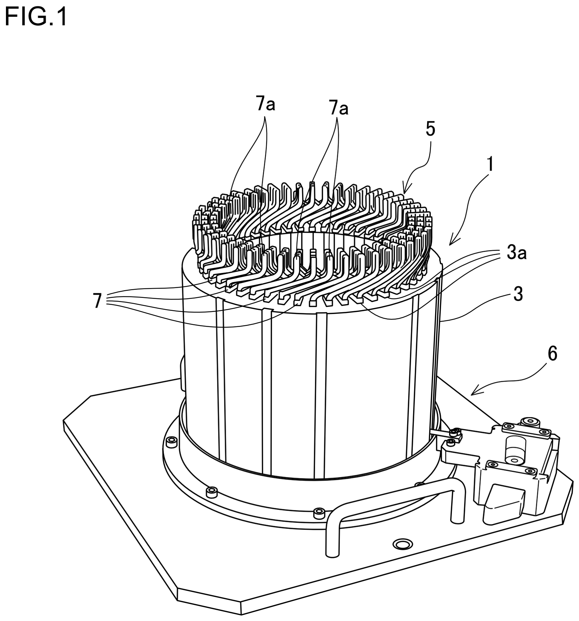

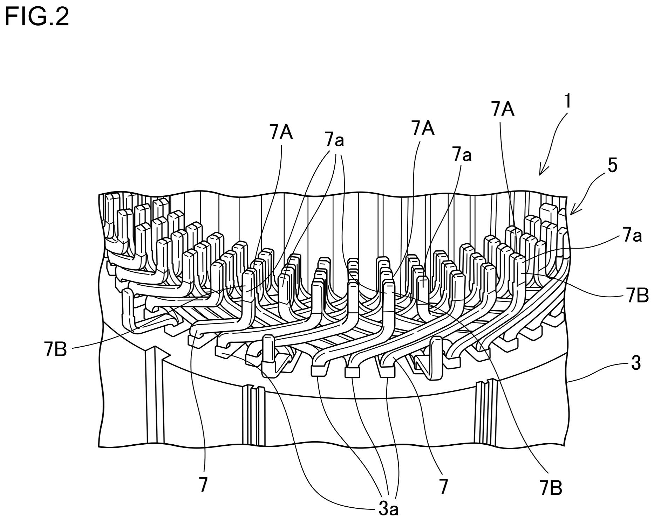

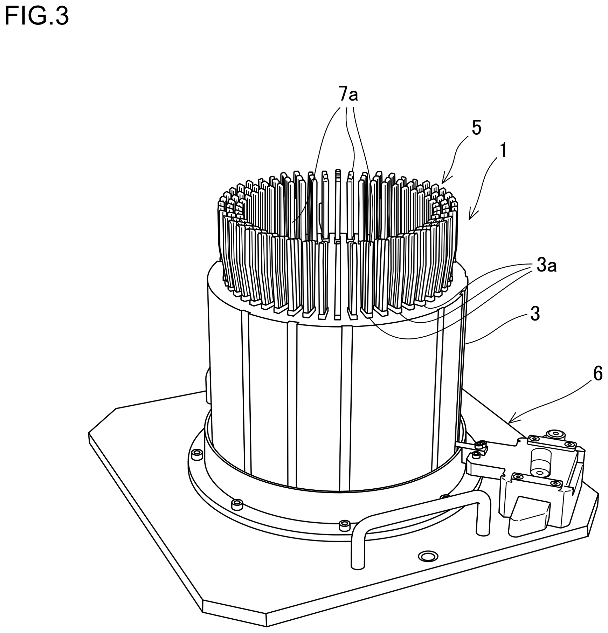

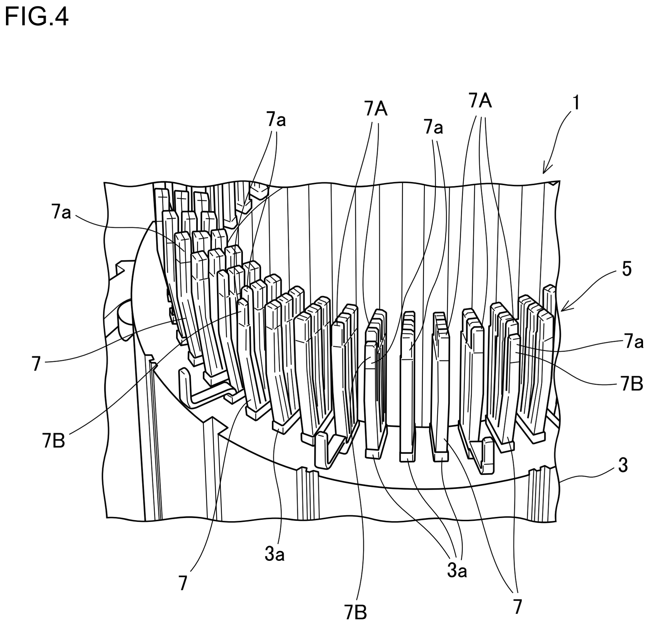

FIG. 1 is a perspective view of a stator supported by a support jig after bending first and second tip portions according to the embodiment of the present invention. FIG. 2 is an enlarged perspective view illustrating part of the stator of FIG. 1. FIG. 3 is a perspective view of the stator supported by the support jig before bending the first and second tip portions according to the embodiment of the present invention. FIG. 4 is an enlarged perspective view illustrating part of the stator of FIG. 3.

The stator 1 of FIG. 1 composes a rotating electrical machine together with a rotor (not illustrated). The rotating electrical machine is configured as, for example, a 3-phase (U-phase, V-phase, and W-phase) AC permanent magnet synchronous motor with 8 poles, which drives driving wheels of an electric vehicle not illustrated and generates electricity according to regenerative braking force from the driving wheels.

Here, FIG. 1 illustrates a state that a stator core 3 incorporating a stator coil 5 is supported by a support jig 6. In the state of FIG. 1, tip portions 7A and 7B (see FIG. 2) including coil ends 7a of each segment coil 7 are bent.

In this state, adjacent coil ends 7a are joined by welding to form the stator coil 5 using the segment coils 7. Thereafter, insulating coating is conducted to the coil ends 7a, and resin encapsulation is conducted to a portion of the stator coil 5 and the like to form the stator 1 for a rotating electrical machine. In the following explanation, one illustrated in FIG. 1 is regarded as the stator 1 for the explanation as a matter of convenience.

The stator 1 is provided with the stator core 3 and the stator coil 5. The stator core 3 is formed by stacking, for example, a plurality of annular electromagnetic steel plates. The stator coil 5 is provided for three phases in the stator core 3 and is configured into a wave-winding shape. The stator coil 5 is composed of a plurality of segment coils 7.

The stator core 3 is provided with a plurality of slots 3 at equal intervals in a circumferential direction (rotational direction of the rotating electrical machine). The segment coils 7 are inserted into the slots 3. With this, the segment coils 7 are held by the stator core 3.

The plurality of segment coils 7 are formed into a U-shape, for example, a hairpin shape, respectively, and are combined in the circumferential direction with respect to the stator core 3. The segment coils 7 are arranged along the circumferential direction, and are shifted to an adjacent layer at apex points of the hairpin shapes of respective segment coils 7. It should be noted that the apex points of the hairpin shapes are hidden by the support jig 6 on the lower side of FIG. 1, and are not illustrated.

As illustrated in FIGS. 1 and 2, each segment coil 7 is made of, for example, a rectangular flat wire having a rectangular cross section. The sectional shape of the segment coil 7 is, however, not particularly limited. In the segment coils 7, first tip portions 7A and second tip portions 7B including the coil ends 7a having no insulating layer are projected from the stator core 3 in the axial direction.

The insulating layer is formed entirely on the portion other than the coil ends 7 7a. The axial direction is a direction along an axis of the stator core 3. The first tip portion 7A and the second tip portion 7B of the present embodiment includes portions inclined with respect to the axial direction, and the projecting in this context means that tip ends of the first tip portions 7A and the second tip portions 7B are disposed so as to be displaced with respect to base ends of the first tip portions 7A and the second tip portions 7B in the axial direction, respectively.

The first tip portions 7A and the second tip portions 7B are subjected to a twisting process and are bent. The first tip portions 7A and the second tip portions 7B are, therefore, tip regions in which bending is performed on hairpin leg portions in the segment coils 7.

In sets of coil ends 7 between the adjacent layers, the tip ends of the coil ends 7a are joined with welded portions in a state in which front faces of one coil ends 7a and back faces of the other coil ends 7a face each other. The sets of the joined coil ends 7a are arranged in the circumferential direction and the radial direction with respect to the stator core 3.

As illustrated in FIGS. 3 and 4, the second tip portions 7B, in a state before bending, are shorter than the first tip portions 7A in length of the projecting from the stator core 3 in the axial direction. The second tip portions 7B of the present embodiment have the same configuration as the first tip portions 7A except for the length of the projecting.

The U-phase, V-phase, and W-phase of the stator coil 5 each include a first coil including a lead wire and a second coil connected to a neutral point. The second tip portions 7B of the second coil are connected to the first tip portions 7A of the first coil in series. In this connection, the segment coils 7 including the second tip portions 7B of the second coil are arranged to be displaced in the circumferential direction by one slot with respect to the segment coils 7 of the first coil.

As a result, in the present embodiment, the second tip portions 7B projecting from the layer on the outermost peripheral side are formed so as to be shorter than the first tip portions 7A. It should be noted that joining of the first and the second tip portions 7A and 7B having different lengths before bending to which the present embodiment is applied are an example, and the first and the second tip portions having different lengths may be provided at other portions.

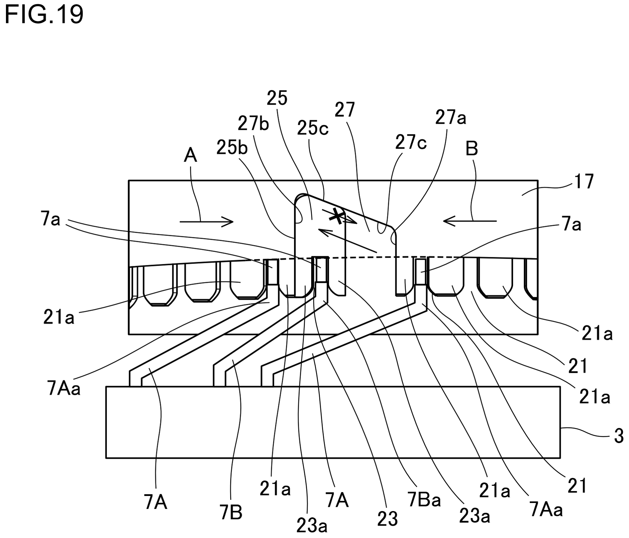

The coil ends 7a of the bent first and the bent second tip portions 7A and 7B are made uniform in a pitch in the circumferential direction and a height position of the tip ends in the projection from the slot 3a in the axial direction. A length dimension from the tip ends of the coil ends 7a to bent positions 7Aa and 7Ba (see FIG. 19) of the coil ends 7a are also made uniform in the first and the second tip portions 7A and 7B. The making-uniform in this context means the same or substantially the same, and allows deviation within a range that does not affect when the coil ends 7a of the first and the second tip portions 7A and 7B are joined to the other coil ends 7a.

### [Twisting machining device for stator]

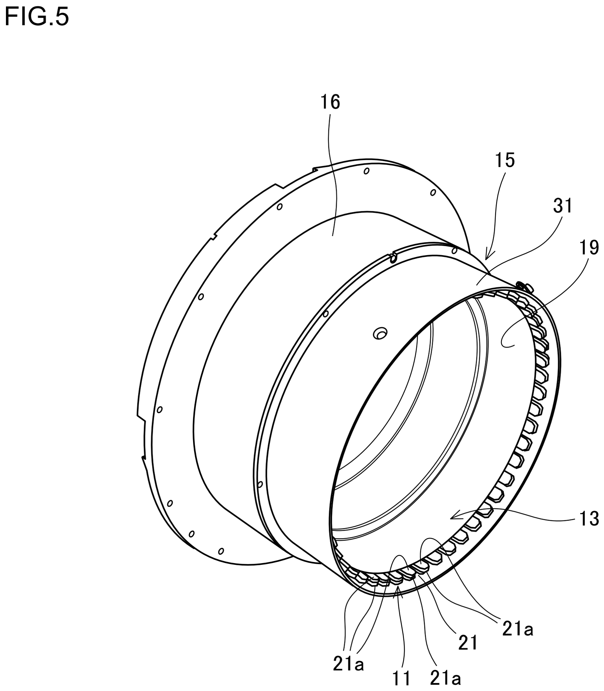

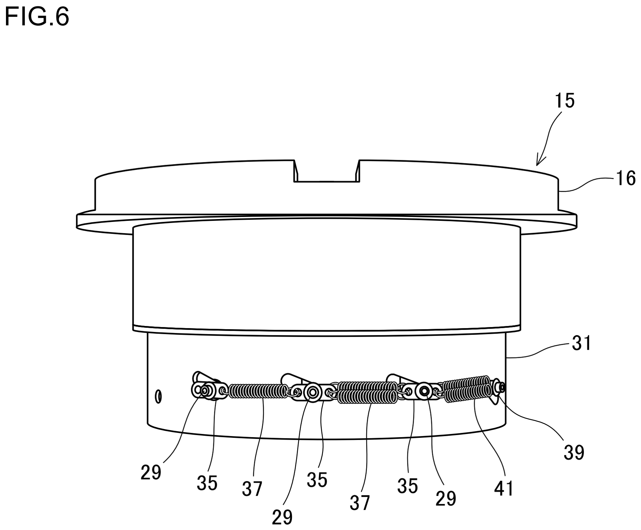

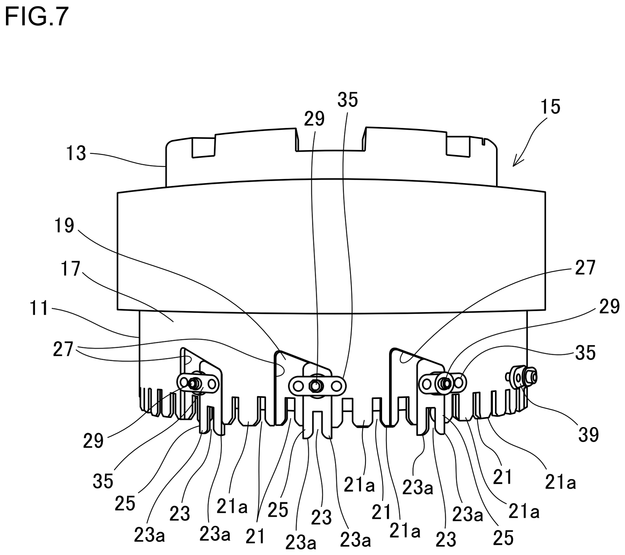

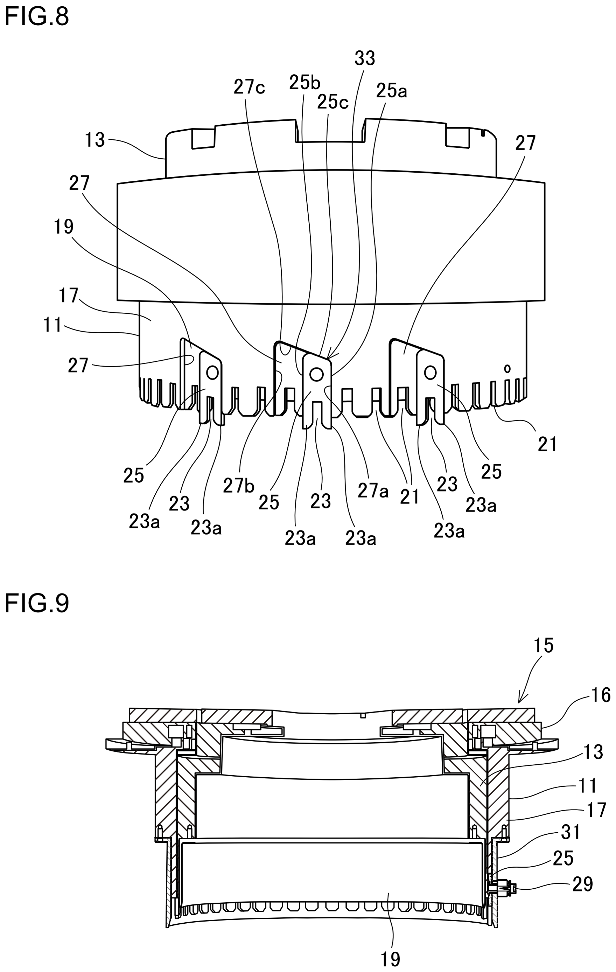

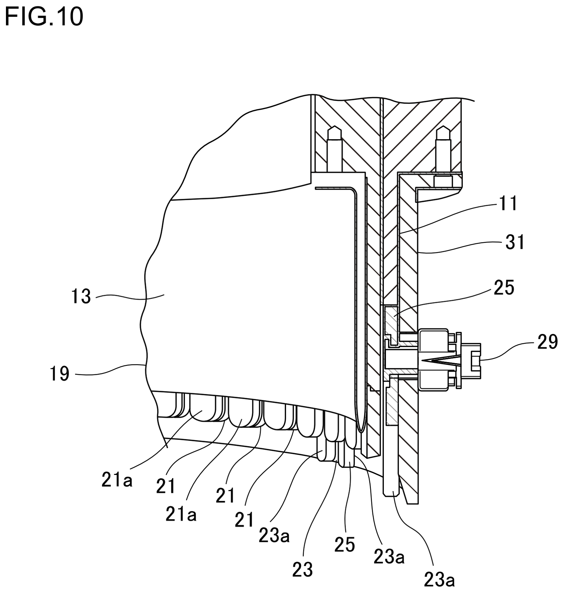

FIG. 5 is a perspective view illustrating a twisting jig crown used in the twisting machining device according to the embodiment of the present invention. FIG. 6 is a side view of the twisting jig crown of FIG. 5. FIG. 7 is a side view illustrating the twisting jig crown of FIG. 5 in which a guide ring and the like are omitted. FIG. 8 is a side view illustrating the twisting jig crown of FIG. 7 in which guide pins and the like are omitted. FIG. 9 is a sectional view of the twisting jig crown of FIG. 5. FIG. 10 is an enlarged sectional view illustrating part of FIG. 9.

According to the present embodiment, the manufacturing method for the stator 1 is executed by the twisting machining device. With this, the first and the second tip portions 7A and 7B projecting from the stator core 3 in the axial direction as illustrated in FIGS. 3 and 4 are bent in the circumferential direction as illustrated in FIGS. 1 and 2. It, however, may execute the manufacturing method for the stator 1 using other than the twisting machining device. The coil ends 7a are joined to each other in the bent first and the bent second tip portions 7A and 7B in a subsequent process.

In the present embodiment, as illustrated in FIGS. 1 to 4, the first tip portions 7A to be bent are in six layers from the first one on the outermost periphery to the sixth one on the innermost periphery in the radial direction. The second tip portions 7B are disposed as parts of the layer on the outermost periphery.

Bending of the first tip portions 7A is common in the first to the sixth layers, and is performed by relatively moving each first tip portion 7A in the circumferential direction with respect to the stator core 3 while holding the coil end 7a of each first tip portion 7A.

Bending of the second tip portion 7B of the first layer being the outermost periphery is performed by relatively moving each second tip portion 7B in the circumferential direction with respect to the stator core 3 while holding the coil end 7a of each second tip portion 7B together with the bending of the first tip portions 7A of the first layer being the outermost periphery.

As illustrated in FIGS. 5 to 10, the twisting machining device of the present embodiment is provided with a cylindrical first twisting jig 11, a cylindrical second twisting jig 13, and the like. The first twisting jig 11 and the second twisting jig 13 are combined concentrically to form the twisting jig crown 15. It should be noted that the first twisting jig 11 and the second twisting jig 13 may be used individually without forming the twisting jig crown 15.

The first twisting jig 11 conducts a twisting process to a group of the first tip portions 7A and a group of the second tip portions 7B arranged in the first layer of the stator 1 at the same time. The second twisting jig 13 conducts a twisting process to a group of the first tip portions 7A of the second layer on the inner side of the outermost periphery.

In addition, since a group of the first tip portions 7A in the third layer to a group of the first tip portions 7A in the sixth layer are arranged in the circumferential direction on the inner side of the second layer in the stator 1 of the embodiment, six twisting jigs are correspondingly provided in total.

Here, main explanation is omitted for the twisting jigs used for the third to the sixth layers for convenience of explanation, since a basic structure thereof conforms to of the second twisting jig 13 and operation of the twisting processing conforms to of the twisting jig crown 15.

The first twisting jig 11 and the second twisting jig 13 are in a cylindrical shape and arranged to an outer peripheral guide 16 with a flange. The twisting machining device additionally includes a lifting mechanism, a rotation mechanism, a crown exchange mechanism, a control device, and the like which are not illustrated.

The lifting mechanism vertically displaces the stator 1 supported by the support jig 6 with respect to the twisting jig crown 15. The rotation mechanism rotates the first and the second twisting jigs 11 and 13. The crown exchange mechanism replaces a twisting jig crown for different layers so as to be positioned on the stator 1. The control device is configured by a computer to control each unit of the twisting machining device.

It should be noted that the lifting mechanism, the rotation driving mechanism, and the crown exchange mechanism are free in structure and the like as long as the twisting process is conducted to the stator 1, and may be, for example, in a configuration in which the twisting jig crown is moved up and down relative to a fixed stator or the like.

The first twisting jig 11 and the second twisting jig 13 are configured by cylindrical bodies 17 and 19 that are coaxially fitted. The first holding portions 21 are provided on respective lower ends of the cylindrical bodies 17 and 19 at predetermined pitches in the circumferential direction in a series.

The first holding portions 21 are formed so as to hold at least the axial base portions of the coil ends 7a of the first tip portions 7A, respectively. The base portion is a boundary region in the coil end 7a having no insulating layer with respect to the other portion of the segment coil 7 having an insulating layer. A length of the base portion may be set within a range not to cause the coil end 7a to be bent when the first tip portion 7 A is bent, and may be in accordance with the shape, the bending force, and the like of the first holding portion 21.

The first holding portion 21 of the present embodiment causes the coil end 7a of the first tip portion 7A to be inserted and held in the circumferential direction. The first holding portion 21 is relatively displaced with respect to the stator core 3 in the circumferential direction while holding at least the base portion of the first tip portion 7A to bend the first tip portion 7A.

The first twisting jig 11 of the present embodiment is supported rotatably about an axis to displace the first holding portion 21 in the circumferential direction by relative rotation with respect to the stator core 3.

The cylindrical body 17 of the first twisting jig 11 is provided with the second holding portions 23 via movable bodies 25 explained later. The second holding portions 23 are formed so as to hold at least the axial base portions of the second tip portions 7B, respectively. Similarly to the first tip portion 7A, the base portion is a boundary region in the coil end 7a having no insulating layer with respect to the other portion of the segment coil 7 having the insulating layer.

The second holding portion 23 of the present embodiment causes the coil end 7a of the second tip portion 7B to be inserted and held in the circumferential direction. The second holding portion 23 is displaceable with respect to the first holding portion 21 at least in the axial direction. As a result, the second holding portion 23 allows the first tip portion 7A and the second tip portion 7B to be displaced to approach each other while holding at least the base portion of the coil end 7a of the second tip portion 7B and is relatively displaced in the circumferential direction with respect to the stator core 3 together with the first holding portion 21 to bend the second tip portion 7B.

In the present embodiment, the second holding portion 23 is displaceable in the axial direction and the circumferential direction. This displacement is displaced in a predetermined range in the circumferential direction and the axial direction with respect to the first twisting jig 11 during the displacement of the first holding portion 21 by means of the first twisting jig 11, and then is displaced together with the first holding portion 21 by means of the first twisting jig 11 with respect to the stator core 3.

With this, a displacement amount of the second holding portion 23 in the circumferential direction with respect to the stator core 3 is smaller than a displacement amount of the first holding portion 21 in the circumferential direction with respect to the stator core 3. In addition, the displacement amount of the second holding portion 23 is in proportion to that the segment coils 7 are shifted in the circumferential direction by one slot, and is smaller by one slot. In addition, since the second holding portion 23 should bend the second tip portion 7B while suppressing half-inserting of the second tip portion 7B, it is not necessarily to reduce the displacement amount in the circumferential direction relative to of the first holding portion 21. The displacement of the second holding portion 23 will be explained together with the movable body 25.

The first holding portion 21 is composed of first tooth portions 21a, and the second holding portion 23 is composed of second tooth portions 23a.

The first tooth portions 21a are projections projecting in the axial direction from the lower end of each of the cylindrical bodies 17 and 19. The first tooth portions 21a causes the first tip portion 7A to be inserted between the first tooth portions 21a adjacent to each other in the circumferential direction. The second tooth portions 23a are projections projecting in the axial direction from the lower end of the movable body 25, respectively. A pair of second tooth portions 23a is provided at each of predetermined positions in the circumferential direction, and the second tip portion 7B is inserted between the pair of the second tooth portions 23a. A plurality of the pairs of the second tooth portions 23a, however, may be provided at each of the predetermined portions, and the plurality of the second tip portions 7B may be inserted at the predetermined position.

A width in the circumferential direction and a depth in the axial direction of an interval between the adjacent first tooth portions 21a are the same as a width in the circumferential direction and a depth in the axial direction of an interval between the second tooth portions 23a. The interval between the first tooth portions 21a and the interval between the second tooth portions 23a, however, may be different in width and the depth according to the specification of the segment coil 7.

The width of the interval of the first tooth portion 21a is set to be slightly larger than a width of the first tip portion 7A in the circumferential direction, and the width of the interval of the second tooth portion 23a is set to be slightly larger than a width of the second tip portion 7B in the circumferential direction. The widths of the first and the second tip portions 7A and 7B in the circumferential direction are the same.

The depth of the interval of the first tooth portions 21a and the depth of the interval of the second tooth portions 21b in the axial direction are formed to be equal to or slightly larger than the length of the coil end 7a. The first and the second holding portions 21 and 23 are, therefore, configured to cause the first and the second tip portions 7A and 7B to be inserted with a whole of the coil end 7a having no insulating layer, or the whole of the coil end 7a with slightly inclusive of a portion having the insulating layer. With this, the first and the second holding portions 21 and 23 of the present embodiment hold the whole including the base portion of the coil end 7a in the circumferential direction.

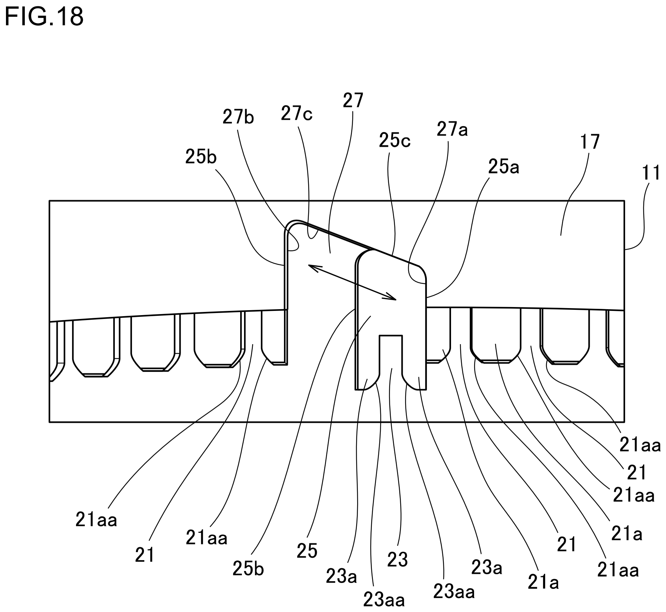

Lengths from the tip ends of the coil ends 7a to the bent positions 7Aa and 7Ba (see FIG. 19) are set according to depths of the first and the second holding portions 21 and 23 as the depths of the intervals of the first and the second tooth portions 21a and 23a. The depths of the first and the second holding portions 21 and 23 are the same as each other as explained above or may be different. Rounded face portions 21aa and 23aa (see FIG. 18 and the like) are formed in the first and the second tooth portions 21a and 23a, and insertion ports of the first and the second holding portions 21 and 23 into which the first and the second tip portions 7A and 7B are inserted are widened.

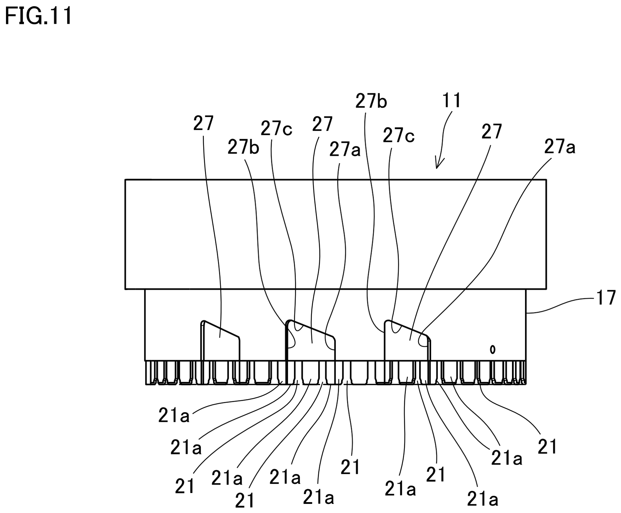

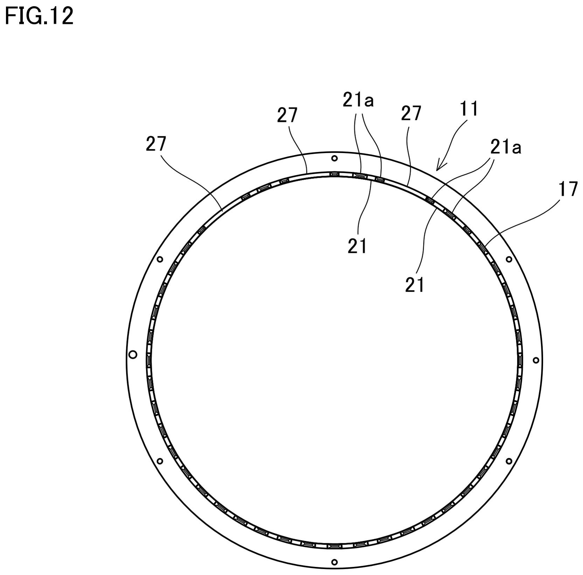

FIG. 11 is a side view of the first twisting jig provided in the twisting jig crown of FIG. 5. FIG. 12 is a bottom view illustrating the first twisting jig of FIG. 11.

Referring also to FIGS. 11 and 12, the first twisting jig 11 is provided with the movable bodies 25 to form a twisting jig assembly. The first twisting jig 11 is provided with accommodating portions 27 that incorporate the movable bodies 25 so as to be displaceable in a predetermined range in the circumferential direction and the axial direction, respectively. The accommodating portions 27 are provided according to the number of the second tip portions 7B in the circumferential direction of the cylindrical body 17. In the embodiment, the accommodating portions are set on three positions according to the three second tip portions 7B.

The accommodating portion 27 is a recessed portion that is provided adjacent to the first tooth portions 21a of the first twisting jig 11 in the circumferential direction, and has a wider interval between the first tooth portions 21a in the circumferential direction. Particularly, the accommodating portion 27 is a recessed portion in the axial direction with respect to the lower end of the cylindrical body 17, and is an opening penetrating the cylindrical body 17 in the radial direction.

The accommodating portion 27 serving as the recessed portion is composed of stopper portions 27a and 27b along the axial direction of the cylindrical body 17 and a receiving portion 27c serving as a bottom portion in the axial direction of the recessed portion. The stopper portions 27a and 27b each are a flat face along the axial direction and raised in the radial direction. The receiving portion 27c is a flat face inclined with respect to the circumferential direction and raised in the radial direction, to receive the movable body 25 in the axial direction. With this, the first twisting jig 11 is configured so as to have the receiving portion 27c inclined with respect to the circumferential direction to receive the movable body 25 in the axial direction. In addition, the receiving portion 27c is the bottom portion in the axial direction of the recessed portion. A width between the stopper portions 27a and 27b being a width of the accommodating portion 27 in the circumferential direction is not particularly limited, but is set so as to be sized over the three first tooth portions 21a.

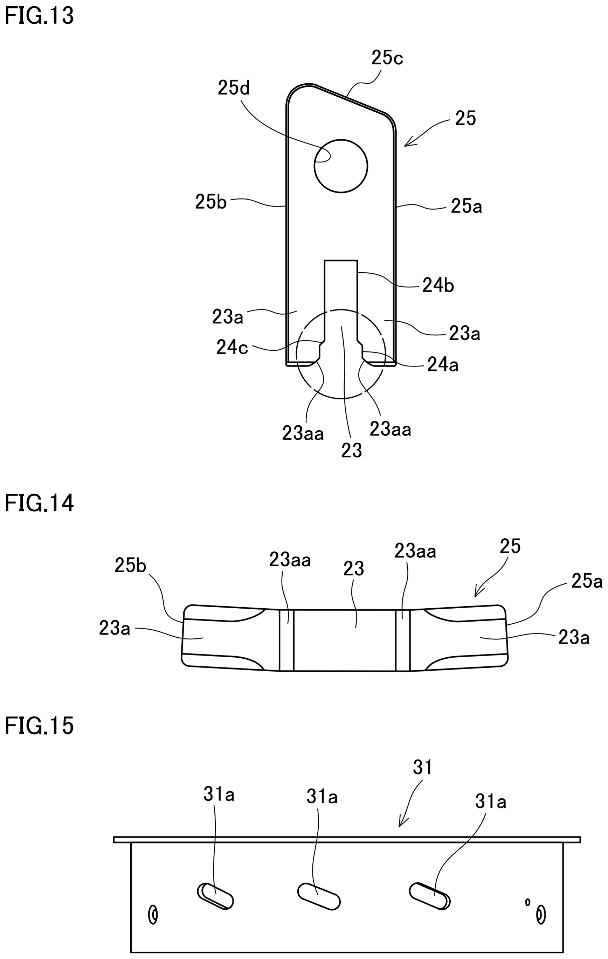

FIG. 13 is a front view illustrating the movable body of the twisting jig provided in the twisting jig crown of FIG. 5. FIG. 14 is a bottom view of the movable body of FIG. 13.

Referring also to FIGS. 13 and 14, the movable bodies 25 are incorporated in the first twisting jig 11 and include the second holding portions 23, respectively. The movable body 25 is displaceable at least in the axial direction with respect to the first twisting jig 11, and rotates relatively with respect to the stator core 3 together with the first twisting jig 11 to displace the second holding portion 23.

In the present embodiment, the movable body 25 is configured to be displaceable in a predetermined range in the circumferential direction and the axial direction with respect to the first twisting jig 11 during the displacement of the first holding portion 21 by means of the first twisting jig 11. After the displacement in this predetermined range, the movable body 25 relatively rotates with respect to the stator core 3 together with the first twisting jig 11.

The movable body 25 is formed of a plate body curved by curvature of the cylindrical body 17. At a lower end of the movable body 25, a pair of second tooth portions 23a of the second holding portion 23 are provided to project in the axial direction. In addition, the interval between the second tooth portions 23a may have a configuration in which a circumferential dimension may vary in the axial direction as illustrated in FIG. 13 other than the configuration in which the circumferential dimension is constant in the axial direction as illustrated in FIG. 8 or the like.

In FIG. 13, an interval between tip side portions 24a of the second tooth portions 23a is wider than an interval between base end side portions 24b of the second tooth portions 23a in the circumferential direction. With this, the tip side portion 24a and the base end side portion 24b are formed in a stepped shape in each second tooth portion 23a. The tip side portion 24a and the base end side portion 24b are continuous by a tapered portion 24c.

Respective sides of the movable body 25 in the circumferential direction are provided with contact portions 25a and 25b corresponding to the stopper portions 27a and 27b. An upper end of the movable body 25 in the axial direction is provided with a received portion 25c corresponding to the receiving portion 27c. Further, the movable body 25 is provided with a support hole 25d for assembly.

The contact portions 25a and 25b are composed of flat surfaces extending along the axial direction and raised in the radial direction, and the received portion 25c is composed of a flat face inclined in the circumferential direction and raised in the radial direction.

A thickness of the movable body 25 is the same as a thickness of the cylindrical body 17. The movable body 25, however, may be thinner or thicker than the cylindrical body 17. A width of the movable body 25 in the circumferential direction, i.e. a width between the contact portions 25a and 25b is smaller than the width between the stopper portions 27a and 27b of the recessed portion 27, and is about half the width spanning between the stopper portions 27a and 27b in the present embodiment.

In the movable body 25, the contact portion 25a contacts the stopper portion 27a at an initial position. At this initial position, lower ends of the second tooth portions 23a or a lower end of the second holding portion 23 are located at a lower position than the lower end of the first holding portion 21. A height difference between the lower end of the second holding portion 23 and the lower end of the first holding portion 21 is preferably greater than or equal to a difference between the projecting lengths of the first and the second tip portions 7A and 7B.

With this, it is ensured that the second holding portion 23 holds the second tip portion 7B being smaller than the first tip portion 7A in projecting length before bending. In a position after displacement of the movable body 25 the contact portion 25b of which contacts the stopper portion 27b, the received portion 25c contacts an upper side of the inclination of the receiving portion 27c. With this, a height position of the second holding portion 23 coincides with a height position of the first holding portion 21.

An inner end of the guide pin 29 is fitted into the support hole 25d of the movable body 25, and the guide pin 29 is provided to the movable body 25. The guide pin 29 protrudes from the movable body 25 to an outside of the first twisting jig 11 in the radial direction.

FIG. 15 is a side view of the guide ring of the twisting jig crown of FIG. 5.

Referring also to FIG. 15, the guide ring 31 is an annular member provided along the outer periphery of the first twisting jig 11. In some cases, the guide ring 31 may be provided along the inner periphery of the first twisting jig 11. In this case, the guide pin 29 protrudes inward from the movable body 25 in the radial direction.

The guide ring 31 is fixed to the lower side of an outer peripheral face of the cylindrical body 17 of the first twisting jig 11 corresponding to the movable bodies 25 and the recessed portions 27. The guide ring 31 is provided with guide holes 31a according to the number of the movable bodies 25. In the present embodiment, the guide holes 31a are formed at three positions of the guide ring 31.

The guide hole 31a passes the guide pin 29 therethrough in the radial direction. The guide hole 31a of the present embodiment is provided so as to be inclined along the receiving portion 27c of the recessed portion 27, and each guide pin 29 is projected radially outward from each guide hole 31a. An inclination angle of the guide hole 31a with respect to the circumferential direction does not need to completely coincide with an inclination angle of the receiving portion 27c with respect to the circumferential direction as long as operation of the movable body 25 explained later is permitted.

Each movable body 25 is held in each recess 27 between the outer peripheral face of the second twisting jig 13 and an inner peripheral face of the guide ring 31.

A guide portion 33 is provided between each movable body 25 and each recessed portion 27. The guide portion 33 displaces the movable body 25 in the circumferential direction and the axial direction with respect to the first twisting jig 1 in accordance with the relative rotation with respect to the stator core 3 and the displacement in the axial direction of the first twisting jig 11.

The guide portion 33 is composed of the receiving portion 27c provided on the recessed portion 27 and the received portion 25c provided on the movable body 25. When the first twisting jig 11 rotates in a state that the second holding portion 23 of the movable body 25 at the initial position holds the second tip portion 7B, the first twisting jig 11 moves relatively to the stator 1 side in the axial direction since the stator 1 is raised. In the guide portion 33, the receiving portion 27c, therefore, presses the received portion 25c to forcibly displace the movable body 25 along the inclination.

It should be noted that the movable body 25 may be supported by an external drive mechanism and incorporated into a recessed portion having an arbitrary shape of the first twisting jig 11 to realize a similar operation.

A coil spring 37 or 41 is interposed as a biasing member between each guide pin 29 and the guide ring 31. The coil spring 37 or 41 biases the movable body 25 to an initial position before the displacement with respect to the first twisting jig 11.

Namely, a spring bracket 35 is attached to an outer end of each guide pin 29. A coil spring 37 is coupled between the spring brackets 35. A coil spring 41 is coupled between the spring bracket 35 of the guide pin 29 located at an end in a rotational direction of the first twisting jig 11 and a spring bracket 39 fixed to the guide ring 31.

Instead of the coil spring 37, a member such as a rod having no elasticity unlike the coil spring 37 may be used. The biasing member may be individually provided between each movable body 25 and the guide ring 31. In addition, in a case of the movable body 25 being externally driven, a biasing member may be provided in an external drive part.

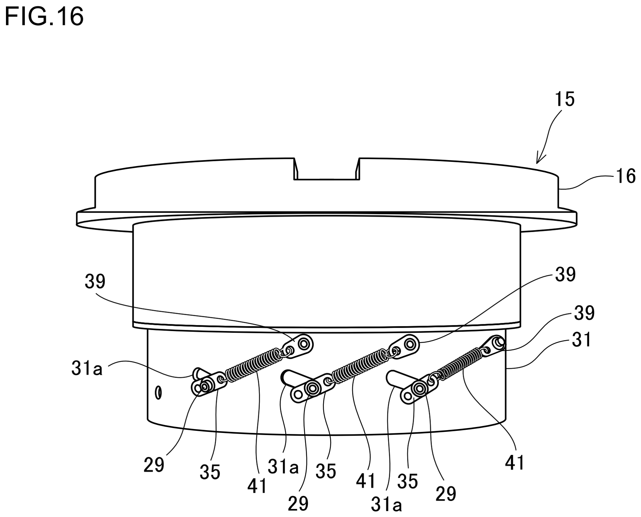

FIG. 16 is a side view illustrating the twisting jig crown according to a modification. In the modification of FIG. 16, a coil spring 41 serving as a biasing member is individually provided between each movable body 25 and the guide ring 31.

In the modification of FIG. 16, the spring bracket 35 attached to each movable body 25 and the spring bracket 39 fixed to the guide ring 31 are coupled by the coil spring 41. At the initial position of the movable body 25, the coil spring 41 is inclined in a direction opposite to the guide hole 31a. An inclination of the coil spring 41 decreases as the movable body 25 is displaced until the contact portion 25b comes into contact with the stopper portion 27b.

### [Twist process]

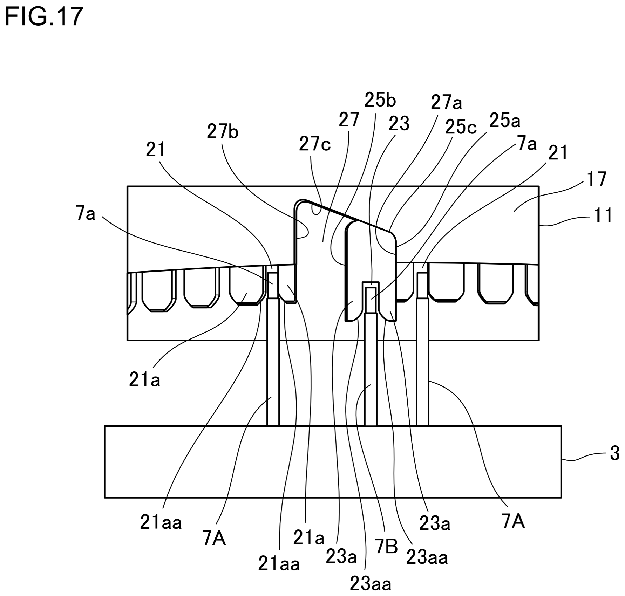

FIG. 17 is an enlarged side view partly illustrating the initial position of the movable body with respect to the first twisting jig of the twisting jig crown of FIG. 5.

Hereinafter, the manufacturing method for the stator 1 will be explained through the twisting process by the twisting machining device. When the first tip portions 7A and the second tip portions 7B of the stator 1 are bent by the twisting process, the stator 1 fixed and supported by the support jig 6 is set in the twisting machining device as illustrated in FIG. 3.

In the embodiment, the twisting jig crown 15 for the first and the second layers and additional two twisting jig crowns for the third to the sixth layers are replaceably supported by the crown exchange mechanism not illustrated.

Then, the twisting jig crown 15 for the first and the second layers is positioned over the stator 1 on the support jig 6 by the crown exchange mechanism, first. It should be noted that the other twisting jig crown may be initially positioned over the stator 1.

In this state, the stator 1 is raised by the lifting mechanism toward the twisting jig crown 15 as well as the support jig 6. With this, the first tip portions 7A are inserted into the first holding portions 21, respectively, to hold the first tip portion 7A between the first tooth portions 21a of each first holding portions 21 as illustrated in FIG. 17. In addition, the second tip portions 7B being relatively short are inserted into the second holding portions 23, respectively, to hold the second tip portion 7B between the second tooth portions 23a of each second holding portions 23.

At this time, the movable body 25 having the second holding portion 7B is biased by the coil springs 37 and 41 with respect to the guide ring 31, and the contact portion 25a is in contact with the stopper portion 27a of the recessed portion 27. With the biassing and the contacting, the received portion 25c contacts the inclination lower sides of the receiving portion 27c, to position the movable body 25 at the initial position.

The second holding portions 23 of the movable bodies 25 are, therefore, located below the first holding portions 21 of the first twisting jig 11 and the second twisting jig 13. With this, each second holding portion 23 is not in a half-inserting state of the coil end 7a of the second tip portion 7B even when the relatively short second tip portion 7B is inserted. Namely, the second tip portion 7B is inserted into the second holding portion 23 with an insertion depth equivalent to an insertion depth of the first tip portion 7A to the first holding portion 21. According to this insertion, the whole coil end 7a having no insulating layer including the base portion, or the whole coil end 7a slightly inclusive of a portion having the insulating layer is held in each of the first tip portion 7A and the second tip portion 7B.

Next, the first twisting jig 11 and the second twisting jig 13 of the twisting jig crown 15 for the first and the second ones are rotated by the rotation driving mechanism in directions opposite to each other. At the same time, the lifting mechanism is controlled to raise the stator 1 toward the twisting jig crown 15.

According to this operation, both the first tip portions 7A and the relatively short second tip portions 7B are bent by the twisting process as the first and the second layers of FIG. 1.

Next, the stator 1 is lowered to pull the twisting jig crown 15 out of the first and the second twisting jigs 11 and 13 of the stator 1. When the twisting jig crown 15 is pulled out, the twisting jig crown 15 is twisted back in advance. With the twisting-back, the first twisting jig 11 and the second twisting jig 13 are rotated in the reverse directions to be slightly turned back.

According to the twisting-back, pressing force between the first holding portions 21 and the coil ends 7a of the first tip portions 7A, and between the second holding portions 23 and the coil ends 7a of the second tip portions 7B in the circumferential direction is eliminated or relaxed. As a result, the first twisting jig 11 and the second twisting jig 13 are smoothly separated from the coil ends 7a of the first tip portions 7A and the second tip portions 7B after the twisting.

Further, the twisting jig crowns for the third and the forth layers and for the fifth and the sixth layers are sequentially positioned by the crown exchange mechanism, to conduct the twisting process using the positioned twisting jig crown while the stator 1 is raised similarly.

In this way, the coil ends 7a in the twisted state are adjacent to each other in the radial direction of the stator core 3.

It should be noted that, although the twisting process is performed by the rotation of the twisting jig crown and the lifting operation of the stator, the stator 1 may be rotated with respect to the twisting jig and the twisting jig crown may be moved up and down.

### [Operation of movable body in twisting process]

FIG. 18 is an enlarged side view illustrating the initial position of the movable body of FIG. 17 with the first and the second tip portions omitted. FIG. 19 is an enlarged side view partly illustrating a moving position of the movable body with respect to the first twisting jig provided in the twisting jig crown of FIG. 5.

As illustrated in FIG. 17 and FIG. 18, each movable body 25 at the initial position contacts the stopper portion 27a with the contact portion 25a and contacts the lower side of the inclination of the receiving portion 27c with the received portion 25c. At this initial position, the second holding portion 23 is lower than the first holding portion 21 in the height position of the lower end as mentioned above.

At the start of the twisting operation, the first tip portions 7A are inserted into the first holding portions 21 as mentioned above, and the relatively short second tip portions 7B are inserted into the second holding portions 23.

Then, rotating the first twisting jig 1 in a direction of an arrow A in FIG. 19 by the twisting operation, the first tip portions 7A and the second tip portions 7B are twisted together.

At an initial stage of rotation of the first twisting jig 11, each movable body 25 is displaced with respect to the first twisting jig 11 due to the position of each movable body in the circumferential direction being held by rigidity of the second tip portion 7B. At this time, the stator 1 is raised toward the twisting jig crown 15, so that the movable body 25 receives axial force from the second tip portion 7B side. The force applied to the movable body 25, it is forcibly slid toward an inclination upside through the contact between the received portion 25c and the receiving portion 27c and is displaced with respect to the first twisting jig 11. With this, the movable body 25 is relatively displaced in a direction of an arrow B in FIG. 19 in the recessed portion 27.

Due to the displacement of the movable body 25, the second tip portion 7B is not displaced with respect to the stator core 3 in the circumferential direction, and the start of the displacement of the second tip portion 7B with respect to the stator core 3 in the circumferential direction is delayed from the first tip portion 7A.

The contact portion 25b comes into contact with the stopper portion 27b of the recessed portion 27, and the movable body 25 is positioned on the opposite side of the initial position in the recessed portion 27. In this state, the second tip portion 7B starts to be displaced in the circumferential direction together with the first tip portion 7B with respect to the stator core 3, and bending of the second tip portion 7B is started.

In this way, after the second tip portion 7B is displaced in the predetermined range in the circumferential direction and the axial direction together with the stator core 3 relative to the first tip portion 7A that is being bent, the second tip portion 7B is displaced and bent in the circumferential direction together with the first tip portion 7A relative to the stator core 3.

As a result, the bending of the second tip portions 7B is performed together with the bending of the first tip portions 7A, and the second tip portions are bent at an angle smaller than of the first tip portions 7A, respectively.

Accordingly, distances between the tip end of the coil end 7a and the bent positions 7Aa and 7 Ba of the coil end 7a are corresponded in the first and the second tip portions 7A and 7B. Further, the pitches in the circumferential direction and the projecting positions of the tip ends of the coil ends 7a are made uniform according to the bending of the first and the second tip portions 7A and 7B. The first and the second tip portions 7A and 7B also overlap positions of the coil ends 7a in a layer direction.

When the twisting process is completed and the stator 1 is lowered, the aforementioned twisting-back is performed in the direction of the arrow B of FIG. 19. At this time, the movable body 25 contacts the receiving portion 27c with the received portion 25c and engages with the first twisting jig 11 to be restricted to be relatively displaced. As a result, the twisting-back of the second holding portions 23 effectively functions with respect to the second tip portions 7B.

### [Effect of Embodiment]

As mentioned above, the manufacturing method of the stator of the present embodiment holds the first tip portions 7A by the first holding portions 21 of the first twisting jig 11, respectively, and holds the second tip portions 7B being relatively short by the second holding portions 23 of the first twisting jig 11, respectively.

The second holding portions 23 are located below the first holding portions 21 at the initial positions of the movable bodies 25, so that the depth at which the first tip portions 7A are inserted into the first holding portions 21 is substantially the same as the depth at which the second tip portions 7B are inserted into the second holding portions 23.

With this, at least the axial base portions of the coil ends 7a are held by the first holding portions 21 and the second holding portions 23 in any of the first tip portions 7A and the second tip portions 7B. It, therefore, suppresses half-inserting of the coil ends 7a to the first tip portions 7A and the second tip portions 7B.

Further, during the twisting process, the movable body 25 receives thrust force and bending resistance force from the second tip portion 7B side, and the received portion 25c slides toward the upside of the inclination along the receiving portion 27c.

Accordingly, the second holding portion 23 allows the first tip portion 7A and the second tip portion 7B to be displaced and approach each other in the axial direction while holding at least the axial base portion of the coil end 7a of the second tip portion 7B.

In this way, during the twisting process of the first and the second tip portions 7A and 7B by the first twisting jig 11, the holding state of the second tip portions 7B by the second holding portions 23 of the movable body 25 is maintained without changing.

Thus, when the relatively short second tip portions 7B are subjected to the twisting process, the second tip portions 7B as well as the first tip portions 7A having different lengths are bent without half-inserting while protecting the coil ends 7a having no insulating layer.

In addition, not only the bending resistance force due to the rigidity of the second tip portion 7B but also the pressurizing force between the stator 1 and the first twisting jig 11 are added as the driving force for the movable body 25. Accordingly, it is possible to reliably bend the second tip portion 7B even if it is a thin rectangular flat wire.

When the twisting jig crown 15 is raised and the first and the second twisting jigs 11 and 13 are pulled out from the stator 1, the twisting-back is performed. At this time, since each movable body 25 contacts the receiving portion 27c with the received portion 25c and is restricted from moving, the twisting-back of the second holding portion 23 effectively functions with respect to the second tip portion 7B. In particular, pulling-out operation is smoothly performed between the first twisting jig 11 and the second tip portions 7B.

Further, in the present embodiment, the relative displacement of the second tip portion 7B in the circumferential direction is smaller than the relative displacement of the first tip portion 7A in the circumferential direction according to the displacement of the movable body 25, to bend the second tip portion 7B. Accordingly, in the stator 1 subjected to the twisting process as mentioned above, the pitches in the circumferential direction and the projecting position of the tip ends of the coil ends 7a are made uniform in both the first and the second tip portions 7A and 7B, so that it is easy to perform the joining of the tip ends of the coil ends 7a between the layers by welding.

### DESCRIPTION OF NUMERALS

- 1: Stator
- 3: Stator core
- 7: Segment coil
- 7A: First tip portion
- 7B: Second tip portion
- 7a: Coil end
- 11: First twisting jig
- 21: First holding portion
- 21a: First tooth portion
- 23: Second holding portion
- 23a: Second tooth portion
- 25: Movable body
- 27: Receiving portion (recessed portion)
- 29: Guide pin
- 31: Guide ring
- 33: Guide portion
- 37, 41: Coil spring (biasing member)

## Claims

1. A manufacturing method for a stator in which first tip portions and second tip portions including coil ends of segment coils held by a stator core and being projected from the stator core in an axial direction are arranged in a circumferential direction, the second tip portions having a relatively short length of the projecting, and the first and the second tip portions being bent in the circumferential direction, comprising:
relatively displacing the first tip portions in the circumferential direction to be bent respect to the stator core while holding at least axial base portions of the coil ends of the first tip portions; and
allowing the first tip portions and the second tip portions to be displaced so as to approach each other in the axial direction while holding at least axial base portions of the coil ends of the second tip portions, and relatively displacing the second tip portions with respect to the stator core in the circumferential direction to be bent.

2. The manufacturing method for a stator according to claim 1, wherein
the bending of the second tip portions is performed while making relative displacement of the second tip portions in the circumferential direction smaller than relative displacement of the first tip portions in the circumferential direction.

3. The manufacturing method for a stator according to claim 1, wherein
the second tip portions are displaced together with the stator core in a predetermined range in the circumferential direction and the axial direction relative to the first tip portions during the bending, and thereafter the second tip portions are displaced together with the first tip portions in the circumferential direction relative to the stator core.

4. The manufacturing method fora stator according to any one of claims 1 to 3 wherein
the bending of the first and the second tip portions makes the coil ends uniform in a pitch in the circumferential direction and in a projecting position of tip ends.

5. A twisting machining device for a stator in which first tip portions and second tip portions including coil ends of segment coils held by a stator core and being projected from the stator core in an axial direction are arranged in a circumferential direction, the second tip portions having a relatively short length of the projecting, and the first and the second tip portions being bent in the circumferential direction, comprising:
first holding portions formed to hold at least axial base portions of the coil ends of the first tip portions, respectively and arranged so as to be relatively displaceable with respect to the stator core in the circumferential direction; and
second holding portions arranged so as to be displaceable to approach with respect to the first holding portion at least in the axial direction, formed to hold at least axial base portions of the coil ends of the second tip portions, respectively, and being relatively displaceable with respect to the stator core in the circumferential direction together with the first holding portions.

6. The twisting machining device according to claim 5, wherein
the second holding portions have a smaller displacement amount in the circumferential direction with respect to the stator core than a displacement amount of the first tip portions in the circumferential direction with respect to the stator core.

7. The twisting machining device according to claim 5, further comprising:
a twisting jig being provided with the first holding portions and being arranged so as to be relatively rotatable with respect to the stator core, to displace the first holding portions by relatively rotating with respect to the stator core; and
movable bodies being incorporated in the twisting jig and being provided with the second holding portions, and being displaceable at least in the axial direction with respect to the twisting jig, to displace the second holding portions by relatively rotating with respect to the stator core together with the twisting jig.

8. The twisting machining device according to claim 7, wherein
the movable bodies are allowed to be displaced in a predetermined range in the circumferential direction and the axial direction with respect to the twisting jig, and relatively rotates with respect to the stator core together with the twisting jig after displacement of the predetermined range.

9. The twisting machining device according to claim 7 or 8, wherein
the twisting jig is provided with receiving portions inclined with respect to the circumferential direction to receive the movable bodies in the axial direction, to displace the movable bodies in the circumferential direction and the axial direction with respect to the twisting jig by relative displacement of the twisting jig to approach the stator core in the axial direction.

10. The twisting machining device according to claim 9, wherein
the twisting jig is provided with accommodating portions incorporating the movable bodies so as to be displaceable within a predetermined range in the circumferential direction and the axial direction, and
the receiving portions are provided on the accommodating portions.

11. The twisting machining apparatus according to claim 10, wherein
the first holding portions are provided with first tooth portions, to cause each coil end of the first tip portions to be inserted between adjacent first tooth portions in the circumferential direction and to be held by the adjacent first tooth portions in the circumferential direction, and
the second holding portion are provided with second tooth portions, to cause each coil end of the second tip portions to be inserted between adjacent second tooth portions in the circumferential direction and to be held by the adjacent second tooth portions in the circumferential direction.

12. The twisting machining device according to claim 11, wherein
the accommodating portions are recessed portions that are provided adjacent to the first tooth portions of the twisting jig in the circumferential direction and have a wider interval in the circumferential direction than an interval between the first tooth portions, and
the receiving portions are bottom portions of the recessed portions in the axial direction.

13. The twisting machining device according to claim 7 or 8, further comprising:
biasing members incorporated between the twisting jig and the movable bodies to bias the movable bodies to initial positions before displacement with respect to the twisting jig.

14. The twisting machining device according to claim 7 or 8, further comprising:
guide pins projecting from the movable bodies in a radial direction of the twisting jig;
a guide ring provided along an outer periphery or an inner periphery of the twisting jig;
guide holes provided to the guide ring and passing the guide pins therethrough in the radial direction; and
biasing members provided between the guide pins and the guide ring to bias the movable bodies to positions before displacement with respect to the twisting jig.

15. A twisting jig assembly used in a twisting machining device for a stator in which first tip portions and second tip portions including coil ends of segment coils held by a stator core and being projected from the stator core in an axial direction are arranged in a circumferential direction, the second tip portions having a relatively short length of the projecting, and the first and the second tip portions being bent in the circumferential direction, comprising:
a twisting jig being provided with first holding portions formed to hold at least axial base portions of the coil ends of the first tip portions, respectively and being arranged so as to be relatively rotatable with respect to the stator core; and
movable bodies being incorporated in the twisting jig and being provided with second holding portions formed to hold at least axial base portions of the coil ends of the second tip portions, respectively, wherein at least the second holding portions are displaceable in the axial direction relative to the twisting jig so as to approach the first holding portions and the movable bodies are rotatable relative to the stator core together with the twisting jig.

16. The twisting jig assembly according to claim 15, wherein
the twisting jig is provided with receiving portions inclined with respect to the circumferential direction to receive the movable bodies in the axial direction, to displace the movable bodies in the circumferential direction and the axial direction with respect to the twisting jig by relative displacement of the twisting jig to approach the stator core in the axial direction.
